# EUROPEAN PATENT APPLICATION

(11) **EP 4 827 185 A1**
(43) Date of publication of application: **21.10.2026**
(21) Application number: 24902714.5
(22) Date of filing: 06.12.2024
(51) Int. Cl.: H04W 52/14

(54) **SIGNAL TRANSMISSION METHODS AND APPARATUSES, TERMINAL AND NETWORK SIDE DEVICE**

(30) Priority: 11.12.2023 CN 202311693818
(71) Applicant: Vivo Mobile Communication Co., Ltd., Dongguan, Guangdong 523863 (CN)
(72) Inventor: JIANG, Dajie, Dongguan, Guangdong 523863 (CN); TAN, Junjie, Dongguan, Guangdong 523863 (CN)
(74) Representative: Lavoix
(86) International application number: PCT/CN2024/137303
(87) International publication number: WO 2025/124293

(57) **Abstract**

This application discloses a signal transmission method and apparatus, a terminal, and a network-side device, pertaining to the field of communications technologies. The signal transmission method according to embodiments of this application includes: measuring, by a terminal, a first signal sent by a network-side device, and obtaining a received power of a sensing target associated path; determining, by the terminal, a transmitting power of a second signal based on the received power of the sensing target associated path; and sending, by the terminal, the second signal to the network-side device by using the transmitting power.

## Description

### CROSS-REFERENCE TO RELATED APPLICATIONS

This application claims priority to Chinese Patent Application No. 202311693818.1, filed in China on December 11, 2023, which is incorporated herein by reference in its entirety.

### TECHNICAL FIELD

This application pertains to the field of communications technologies, and specifically, relates to a signal transmission method and apparatus, a terminal, and a network-side device.

### BACKGROUND

Future mobile communication systems such as systems beyond the fifth-generation (Beyond Fifth Generation, B5G) mobile communication technology or 6G systems also possess sensing capabilities in addition to communication capabilities. The sensing capability allows one or more devices with such sensing capability to sense information such as the orientation, distance, and speed of a target object through the transmission and reception of wireless signals, or detect, track, identify, and image the target object, event, or environment. In the future, with the deployment of small-cell base stations with high-frequency band and large bandwidth capabilities such as millimeter wave and terahertz in 6G networks, the sensing resolution will be significantly improved compared with centimeter wave, thereby enabling 6G networks to provide more refined sensing services.

Currently, the new radio (New Radio, NR) protocol has supported uplink power control methods for communication services. However, uplink power control methods for wireless sensing or for integrated communication and sensing have not yet been clarified.

### SUMMARY

Embodiments of this application provide a signal transmission method and apparatus, a terminal, and a network-side device to implement uplink power control for wireless sensing or for integrated communication and sensing.

According to a first aspect, a signal transmission method is provided, where the method includes:
measuring, by a terminal, a first signal sent by a network-side device, and obtaining a received power of a sensing target associated path;
determining, by the terminal, a transmitting power of a second signal based on the received power of the sensing target associated path; and
sending, by the terminal, the second signal to the network-side device by using the transmitting power.

According to a second aspect, a signal transmission apparatus is provided, applied to a terminal and including:
an obtaining module, configured to measure a first signal sent by a network-side device, and obtain a received power of a sensing target associated path;
a first determining module, configured to determine a transmitting power of a second signal based on the received power of the sensing target associated path; and
a first sending module, configured to send the second signal to the network-side device by using the transmitting power.

According to a third aspect, a signal transmission method is provided, where the method includes:
sending, by a network-side device, a first signal to a terminal; and
receiving, by the network-side device, a second signal sent by the terminal, where a transmitting power of the second signal is determined based on a received power that is of a sensing target associated path and that is obtained by the terminal by receiving the first signal.

According to a fourth aspect, a signal transmission apparatus is provided, applied to a network-side device and including:
a second sending module, configured to send a first signal to a terminal; and
a receiving module, configured to receive a second signal sent by the terminal, where a transmitting power of the second signal is determined based on a received power that is of a sensing target associated path and that is obtained by the terminal by receiving the first signal.

According to a fifth aspect, a terminal is provided, including a processor and a memory, where a program or instructions capable of running on the processor are stored in the memory. When the program or the instructions are executed by the processor, the steps of the method according to the first aspect are implemented.

According to a sixth aspect, a terminal is provided, including a processor and a communication interface, where the processor is configured to: measure a first signal sent by a network-side device, and obtain a received power of a sensing target associated path;
determine a transmitting power of a second signal based on the received power of the sensing target associated path; and
send the second signal to the network-side device by using the transmitting power.

According to a seventh aspect, a network-side device is provided, including a processor and a memory, where a program or instructions capable of running on the processor are stored in the memory. When the program or the instructions are executed by the processor, the steps of the method according to the third aspect are implemented.

According to an eighth aspect, a network-side device is provided and includes a processor and a communication interface, where the communication interface is configured to: send, for the network-side device, a first signal to a terminal; and
receive a second signal sent by the terminal, where a transmitting power of the second signal is determined based on a received power that is of a sensing target associated path and that is obtained by the terminal by receiving the first signal.

According to a ninth aspect, a communication system is provided, including a terminal and a network-side device, where the terminal can be configured to execute the steps of the method according to the first aspect; and the network-side device can be configured to execute the steps of the method according to the third aspect.

According to a tenth aspect, a readable storage medium is provided, where a program or instructions are stored in the readable storage medium. When the program or the instructions are executed by a processor, the steps of the method according to the first aspect or the third aspect are implemented.

According to an eleventh aspect, a chip is provided, where the chip includes a processor and a communication interface, the communication interface is coupled to the processor, and the processor is configured to run a program or instructions to implement the steps of the method according to the first aspect or the third aspect.

According to a twelfth aspect, a computer program/program product is provided, where the computer program/program product is stored in a storage medium, and the computer program/program product is executed by at least one processor to implement the method according to the first aspect or the third aspect.

In the embodiments of this application, a transmitting power of a second signal is determined based on a received power that is of a sensing target associated path and that is obtained by measuring a first signal sent by the network-side device; and then the second signal is sent to the network-side device based on the transmitting power, thereby implementing uplink power control for wireless sensing or for integrated communication and sensing, and ensuring sensing reliability.

### BRIEF DESCRIPTION OF DRAWINGS

FIG. 1 is a block diagram of a wireless communication system to which embodiments of this application are applicable;
FIG. 2 is a schematic diagram of different sensing modes of integrated communication and sensing;
FIG. 3 is a first schematic flowchart of a signal transmission method according to an embodiment of this application;
FIG. 4 is a schematic diagram of multipath of a channel response in a first dimension;
FIG. 5 is a second schematic flowchart of a signal transmission method according to an embodiment of this application;
FIG. 6 is a first schematic diagram of modules of a signal transmission apparatus according to an embodiment of this application;
FIG. 7 is a schematic structural diagram of a terminal according to an embodiment of this application; and
FIG. 8 is a second schematic diagram of modules of a signal transmission apparatus according to an embodiment of this application;
FIG. 9 is a schematic structural diagram of a network-side device according to an embodiment of this application; and
FIG. 10 is a schematic structural diagram of a communication device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", ''second'', and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6^{th} Generation, 6G) communication system.

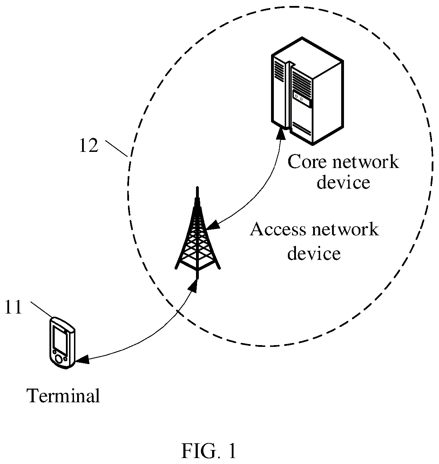

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a smart wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is introduced as an example, and the specific type of the core network device is not limited.

The related technologies related to the embodiments of this application are first described below.

### I. Integrated sensing and communication

Future mobile communication systems such as B5G or 6G systems also possess sensing capabilities in addition to communication capabilities. The sensing capability allows one or more devices with such sensing capability to sense information such as the orientation, distance, and speed of a target object through the transmission and reception of wireless signals, or detect, track, identify, and image the target object, event, or environment. In the future, with the deployment of small-cell base stations with high-frequency band and large bandwidth capabilities such as millimeter wave and terahertz in 6G networks, the sensing resolution will be significantly improved compared with centimeter wave, thereby enabling 6G networks to provide more refined sensing services. Typical sensing functions and application scenarios are shown in Table 1.

**Table 1: Correspondence table of typical sensing functions and application scenarios**

| Communication-sensing category | Sensing function | Application scenario |
|---|---|---|
| Macro sensing category | Weather conditions, air quality, and the like | Meteorology, agriculture, and life services |
| | Vehicle flow (intersection) and pedestrian flow (subway entrance) | Intelligent transportation and commercial services |
| | Target tracking, ranging, speed measurement, shape contour, and the like | Many application scenarios of traditional radar |
| | Environment reconstruction | Intelligent driving and navigation (cars/drones), smart cities (3D maps), and network planning and optimization |
| Refined sensing category | Action/posture/expression recognition | Intelligent interaction of smartphones, games, and smart homes |
| | Heartbeat/breathing, and the like | Health and medical care |
| | Imaging, material detection, composition analysis, and the like | Security inspection, industry, biomedicine, and the like |

Integrated communication and sensing (referred to as communication-sensing integration) means that in a same system, through spectrum sharing and hardware sharing, the integrated design of communication and sensing functions is realized. When transmitting information, the system is capable of sensing information such as orientation, distance, and speed, detecting, tracking, and identifying target devices or events. The communication system and the sensing system complement each other, achieving overall performance improvement and bringing better service experience.

The integration of communication and radar belongs to a typical integrated communication and sensing (communication-sensing fusion) application. In the past, radar systems and communication systems were strictly distinguished due to different research objects and focuses, and the two systems were independently studied in most scenarios. In fact, radar and communication systems are also typical ways of information transmission, acquisition, processing, and exchange, and there are many similarities in working principles, system architectures, and frequency bands. The integrated design of communication and radar has great feasibility, which is mainly reflected in the following aspects: first, both communication systems and sensing systems are based on electromagnetic wave theory and use the transmission and reception of electromagnetic waves to complete information acquisition and transmission; second, both communication systems and sensing systems have structures such as antennas, transmitters, receivers, and signal processors, and there is a large overlap in hardware resources. With the development of technology, there is more and more overlap in operating frequency bands. In addition, there is similarity in key technologies such as signal modulation and reception detection and waveform design. The fusion of communication and radar systems can bring many advantages, such as reducing costs, reducing size, reducing power consumption, improving spectrum efficiency, and reducing mutual interference, thereby improving the overall performance of the system.

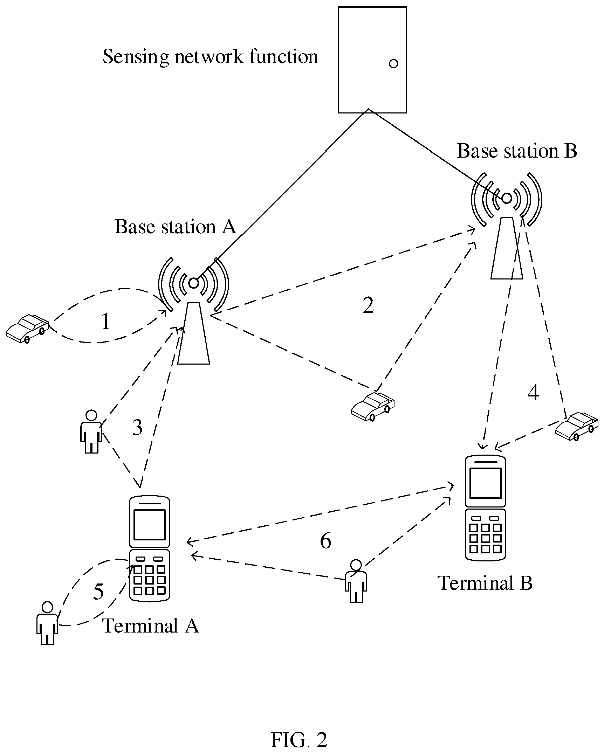

According to different sensing signal transmitting nodes and sensing signal receiving nodes, there are six basic sensing manners, as shown in FIG. 2, specifically including:
(1) Base station echo sensing. In this sensing mode, base station A sends a sensing signal and performs sensing measurement by receiving an echo of the sensing signal.
(2) Inter-base station air interface sensing. In this case, a base station B receives a sensing signal sent by the base station A and performs sensing measurement.
(3) Uplink air interface sensing. In this case, the base station A receives a sensing signal sent by a terminal A and performs sensing measurement.
(4) Downlink air interface sensing. In this case, a terminal B receives a sensing signal sent by the base station B and performs sensing measurement.
(5) Terminal echo sensing. In this case, the terminal A sends a sensing signal and performs sensing measurement by receiving an echo of the sensing signal.
(6) Inter-terminal sidelink (Sidelink) sensing. In this case, the terminal B receives a sensing signal sent by the terminal A and performs sensing measurement.

It should be noted that each sensing mode in FIG. 2 takes one sensing signal transmitting node and one sensing signal receiving node as an example. In an actual system, one or more different sensing modes may be selected according to different sensing use cases and sensing requirements, and each sensing mode may have one or more transmitting nodes and receiving nodes. The sensing targets in FIG. 2 take people and vehicles as examples, and it is assumed that neither people nor vehicles carry or install signal receiving/transmitting devices. The sensing targets in actual scenarios are richer.

### II. Power control in new radio (New Radio, NR)

The NR protocol defines power control for uplink physical uplink shared channel (Physical Uplink Shared Channel, PUSCH), physical uplink control channel (Physical Uplink Control Channel, PUCCH), sounding reference signal (Sounding Reference Signal, SRS), and physical random access channel (Physical Random Access Channel, PRACH).

PUSCH: If a user equipment (User Equipment, UE) transmits a PUSCH on an activated uplink (Uplink, UL) bandwidth part (Bandwidth Part, BWP) b of carrier f of serving cell c by using a parameter set configuration with index j and a PUSCH power control adjustment state with index l, the UE determines the PUSCH transmitting power for PUSCH transmission occasion i as *P*_{PUSCH*,b,f,c*}(*i, j, q_{d}, l*), which is expressed by the following formula 1: $\begin{matrix}{P}_{PUSCH , b , f , c} \left(i, j, {q}_{d}, l\right) \\ = min \left\{\begin{matrix}{P}_{CMAX , f , c} \left(i\right) , \\ {P}_{O _ PUSCH , b , f , c} \left(j\right) + 10 {log}_{10} \left({2}^{u}{M}_{RB , b , f , c}^{PUSCH}\left(i\right)\right) + {α}_{b , f , c} \left(j\right) {PL}_{b , f , c} \left({q}_{d}\right) \\ + {Δ}_{TF , b , f , c} \left(i\right) + {f}_{b , f , c} \left(i, l\right)\end{matrix}\right\} \left[dbm\right]\end{matrix}$ Formula 1,

Description: The parameter *j* is used to indicate a parameter configuration index of open-loop power control (for example, *j*=0 indicates PUSCH in random access (RACH), *j*=1 indicates PUSCH related to configured grant (Configured Grant), *j*>=2 indicates PUSCH of dynamic grant (dynamic grant)), the parameter *l* is used to indicate a process index of closed-loop power control, and *q_{d}* indicates a reference signal index.

*P*_{CMAX*,f,c*}(*i*) indicates the maximum transmitting power of the UE at time i, which is for a carrier and cell;
*P*_{O_PUSCH,*b,f,c*}(*j*) is a target received power (on a resource block (Resource Block, RB) of 15kHz SCS) for the open-loop control configuration index j, which is defined for a BWP, carrier, and cell;
*PL_{b,f,c}*(*q_{d}*) is a downlink path loss estimated by the UE using a reference signal *q_{d},* which is defined for a BWP, carrier, and cell;
*α_{b,f,c}*(*j*) is a partial path loss compensation factor defined for the open-loop control configuration index *j*, which is defined for a BWP, carrier, and cell;
Δ*_{TF,b,f,c}*(*i*) defines a transmitting power required by the UE for each resource element (Resource Element, RE) at time *i*, which is defined for a BWP, carrier, and cell, and is only used for single-layer transmission and is 0 for multi-layer transmission;
${M}_{RB , b , f , c}^{PUSCH} \left(i\right)$ is the number of resource blocks (Resource Block, RB) of the PUSCH at time *i*. Combined with a subcarrier spacing (Subcarrier Spacing, SCS), the total bandwidth of the PUSCH is determined, which is defined for a BWP, carrier, and cell; and
*f_{b,f,c}*(*i,l*) is an offset value introduced for the closed-loop power control process *l* at time *i,* which is the sum of power adjustment values indicated by transmitting power control (Transmit Power Control, TPC) commands in the past time, that is, ${f}_{b , f , c} \left(i, l\right) = {f}_{b , f , c} \left(i-{i}_{0},l\right) + {\sum }_{m = 0}^{C \left({D}_{i}\right) - 1} {δ}_{PUSCH , b , f , c} \left(m, l\right)$, where *δ_{PUSCH,b,f,c}*(*m, l*) is a power adjustment value indicated by the m-th TPC command of the *l*-th closed-loop power control process, all of which are defined for a BWP, carrier, and cell.

PUCCH: If a terminal transmits a PUCCH on an activated UL BWP b of carrier f in a primary cell c using a PUCCH power control adjustment state with index l, the terminal determines a PUCCH transmitting power for PUCCH transmission occasion i as *P*_{PUCCH*,b,f,c*}(*i, qᵤ, q_{d}, l*), which is expressed by the following formula 2: $\begin{matrix}{P}_{PUCCH , b , f , c} \left(i, {q}_{u}, {q}_{d}, l\right) \\ = min \left\{\begin{matrix}{P}_{CMAX , f , c} \left(i\right) , \\ {P}_{O_PUCCH , b , f , c} \left({q}_{u}\right) + 10 {log}_{10} \left({2}^{u}{M}_{RB , b , f , c}^{PUSCH}\left(i\right)\right) \\ + {PL}_{b , f , c} \left({q}_{d}\right) + {Δ}_{F_PUCCH} \left(F\right) + {Δ}_{TF , b , f , c} \left(i\right) + {g}_{b , f , c} \left(i, l\right)\end{matrix}\right\} \left[dbm\right]\end{matrix}$ Formula 2, where:
*P*_{CMAX*,f,c*}(*i*) is the maximum transmitting power of the UE at time *i,* which is for a carrier and cell;
*P*_{*O*_PUSCH,*b,f,c*}(*j*) is a target received power (on an RB of 15kHz SCS) of an open-loop control configuration index *j*, which is defined for a BWP, carrier, and cell;
*PL_{b,f,c}*(*q_{d}*) is a downlink path loss estimated by the UE using the reference signal *q_{d},* which is defined for a BWP, carrier, and cell;
*α_{b,f,c}*(*j*) is a partial path loss compensation factor defined for the open-loop control configuration index *j*, which is defined for a BWP, carrier, and cell;
Δ*_{TF,b,f,c}*(*i*) defines a transmitting power required by the UE for each RE at time *i*, which is defined for a BWP, carrier, and cell, and is only used for single-layer transmission and is 0 for multi-layer transmission;
${M}_{RB , b , f , c}^{PUSCH} \left(i\right)$ is the number of RBs of the PUSCH at time *i.* Combined with the subcarrier spacing (Subcarrier Spacing, SCS), the total bandwidth of the PUSCH is determined, which is defined for a BWP, carrier, and cell; and
*f_{b,f,c}*(*i, l*) is an offset value introduced for the closed-loop power control process *l* at time *i,* which is the sum of power adjustment values indicated by the TPC commands in the past time, that is, ${f}_{b , f , c} \left(i, l\right) = {f}_{b , f , c} \left(i-{i}_{0},l\right) + {\sum }_{m = 0}^{C \left({D}_{i}\right) - 1} {δ}_{PUSCH , b , f , c} \left(m, l\right)$ , where *δ_{PUSCH,b,f,c}*(*m, l*) is a power adjustment value indicated by the *m*-th TPC command of the *l*-th closed-loop power control process, all of which are defined for a BWP, carrier, and cell.

PUCCH: If a terminal transmits a PUCCH on an activated UL BWP b of carrier f in a primary cell c using a PUCCH power control adjustment state with index l, the terminal determines a PUCCH transmitting power in PUCCH transmission occasion i as *P*_{PUCCH*,b,f,c*}(*i, qᵤ, q_{d}*, *l*), which is expressed by the following formula 3: $\begin{matrix}{P}_{PUCCH , b , f , c} \left(i, {q}_{u}, {q}_{d}, l\right) \\ = min \left\{\begin{matrix}{P}_{CMAX , f , c} \left(i\right) , \\ {P}_{O_PUCCH , b , f , c} \left({q}_{u}\right) + 10 {log}_{10} \left({2}^{u}⋅{M}_{RB , b , f , c}^{PUCCH}\left(i\right)\right) \\ + {PL}_{b , f , c} \left({q}_{d}\right) + {Δ}_{F_PUCCH} \left(F\right) + {Δ}_{TF , b , f , c} \left(i\right) + {g}_{b , f , c} \left(i, l\right)\end{matrix}\right\} \left[dBm\right] .\end{matrix}$ Formula 3,

Description: *qᵤ* is an index of the PUCCH (the UE may need to transmit multiple PUCCHs at the same time), and the difference from PUSCH is as follows:
1. No partial path loss compensation factor;
2. *P*_{O_PUCCH*,b,f,c*}(*qᵤ*) is a target received power of the *qᵤ* th PUCCH, which is defined for a BWP, carrier, and cell;
3. Δ_{F_PUCCH}(*F*) indicates the power control offset to be introduced for different PUCCH formats (F), for example
   delta-PUCCH-f0 is applicable to PUCCH format 0, delta-PUCCH-f1 is applicable to PUCCH format 1, delta-PUCCH-f2 is applicable to PUCCH format 2, delta-PUCCH-f3 is applicable to PUCCH format 3 if present, and delta-PUCCH-f4 for PUCCH format 4; otherwise, Δ_{F_PUCCH}(*F*) = 0; and
4*. g_{b,f,c}*(*i, l*) is an offset value introduced for the closed-loop power control process *l* at time *i,* which is the sum of power adjustment values indicated by the TPC commands in the past time.

SRS: If a terminal transmits an SRS on an activated UL BWP b of carrier f of serving cell c according to the configuration of SRS-resourceset using an SRS power control adjustment state with index I, the terminal determines the SRS transmitting power for SRS transmission occasion i as *P*_{SRS*,b,f,c*}(*i, qₛ, l*), which is expressed by the following formula 4:
${P}_{SRS , b , f , c} \left(i, {q}_{s}, l\right) = min \left\{\begin{matrix}{P}_{CMAX , f , c} \left(i\right) , \\ {P}_{O _ SRS , b , f , c} \left({q}_{s}\right) + 10 {log}_{10} \left({2}^{u}⋅{M}_{SRS , b , f , c}\left(i\right)\right) \\ + {α}_{SRS , b , f , c} \left({q}_{s}\right) ⋅ {PL}_{b , f , c} \left({q}_{d}\right) + {h}_{b , f , c} \left(i, l\right)\end{matrix}\right\} \left[dBm\right] .$ Formula 4,

The difference from PUSCH is as follows:
*P*_{O_SRS,*b,f,c*}(*qₛ*) is an SRS target received power of the *qₛ*th SRS resource set, which is defined for a BWP, carrier, and cell;
*M*_{SRS*,b,f,c*}(*i*) is the number of RBs of the SRS at time *i*. Combined with SCS, the total bandwidth of the SRS is determined, which is defined for a BWP, carrier, and cell;
*α*_{SRS,*b,f,c*}(*qₛ*) is a partial path loss compensation factor of the SRS resource set *qₛ,* which is defined for a BWP, carrier, and cell; and
*h_{b,f,c}*(*i, l*) is an offset value introduced for the closed-loop power control process *l* at time *i,* which may be the same as a power control offset value of the PUSCH, or (when there is no PUSCH transmission) is a sum of power adjustment values indicated by the TPC commands in the past time.

PRACH: A UE determines a transmitting power *P_{PRACH,b,f,c}*(*i*) of a PRACH based on a downlink reference signal (Downlink Reference Signal, DL RS) of cell c in transmission occasion i for an activated UL BWP b of carrier f of cell c, which is expressed by the following formula 5: 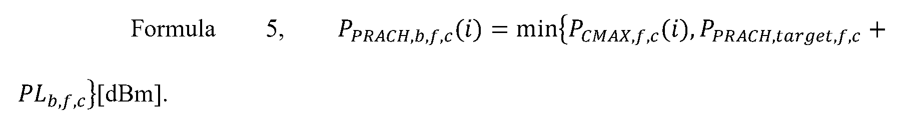 PPRACH,b,f,c(i) = min{PCMAX,f,c(i), PPRACH,target,f,c + PLb,f,c}[dBm]. Formula 5,

The difference from PUSCH is as follows:
*P_{PRACH,target,f,c}* is a target received power of the PRACH, given by *PREAMBLE_RECEIVED*_*TARGET_POWER,* which is defined for a BWP, carrier, and cell; and
*PL_{b,f,c}* is a downlink path loss (*referenceSignalPower -* higher layer filtered RSRP in dBm) estimated by the UE using the uniquely associated reference signal, which is defined for a BWP, carrier, and cell.

Currently, the power control mechanism for uplink sensing signals has not been clarified.

The following specifically describes a signal transmission method and apparatus, a terminal, and a network-side device provided in the embodiments of this application through specific embodiments and application scenarios thereof with reference to the accompanying drawings.

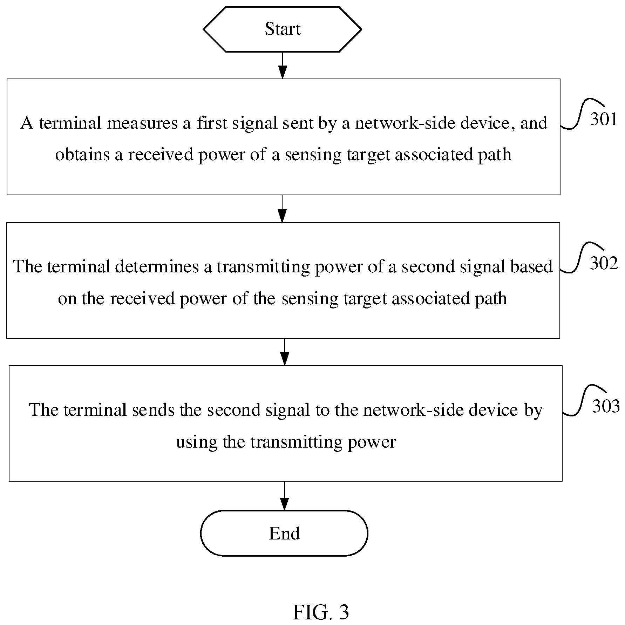

As shown in FIG. 3, an embodiment of this application provides a signal transmission method, including the following steps.

Step 301: A terminal measures a first signal sent by a network-side device, and obtains a received power of a sensing target associated path.

Step 302: The terminal determines a transmitting power of a second signal based on the received power of the sensing target associated path.

Step 303: The terminal sends the second signal to the network-side device by using the transmitting power.

It should be noted that, in this embodiment of this application, a transmitting power of a second signal is determined based on a received power that is of a sensing target associated path and that is obtained by measuring a first signal sent by the network-side device; and then the second signal is sent to the network-side device based on the transmitting power, thereby implementing uplink power control for wireless sensing or for integrated communication and sensing, and ensuring sensing reliability.

Optionally, the first signal mentioned in this embodiment of this application is sent by the network-side device to the terminal. The first signal may be a dedicated signal for sensing services, a communication signal (for example, a reference signal (such as a channel state information reference signal (Channel State Information - Reference Signal, CSI-RS)), a tracking reference signal (Tracking Reference Signal, TRS), a synchronization signal, or the like), or other signals. The second signal may be a dedicated signal for sensing services, a communication signal (for example, a sounding reference signal (Sounding Reference Signal, SRS)), or other signals.

It should be noted that, prior to this, the network-side device needs to determine a target beam through a downlink sensing beam management process or an uplink sensing beam management process.

The target beam includes at least one of the following:
A11. a downlink transmitting beam;
A12. a downlink receiving beam;
A13. an uplink transmitting beam; and
A14. an uplink receiving beam.

That is, the network-side device needs to determine a downlink transmitting beam, or a beam pair of a downlink transmitting beam and a downlink receiving beam, or an uplink transmitting beam, or a beam pair of an uplink transmitting beam and an uplink receiving beam, respectively, through a downlink sensing beam management process or an uplink sensing beam management process (for example, making the downlink beam point to a location of a sensing target; or making the uplink beam point to a location of a sensing target).

Optionally, in this manner, the first signal is quasi-co-located with the downlink transmitting beam determined through the downlink sensing beam management process or the uplink sensing beam management process. Optionally, in this manner, the terminal uses a downlink receiving beam associated with the downlink transmitting beam determined through the downlink sensing beam management process or the uplink sensing beam management process (that is, the same beam pair) to receive and measure the first signal sent by the network-side device.

Optionally, in one implementation, a specific implementation of determining the transmitting power of the second signal based on the received power of the sensing target associated path includes:
determining the transmitting power of the second signal based on a first parameter.

Optionally, a specific form 1 of a second parameter is: the first parameter includes A21, A22, and A23; or
a specific form 2 of the second parameter is: the first parameter includes A31 to A34, and the like.

A21. Maximum transmitting power of the terminal.

It should be noted that the maximum transmitting power of the terminal may be directly obtained by the terminal according to its own configuration.

A22. Target received power.

Optionally, in a first implementation, the target received power is equal to a preset received power (ReceivedTargetPower) of the sensing target associated path.

It should be noted that the preset received power of the sensing target associated path is configured by the network-side device and sent to the terminal. For example, the preset received power of the sensing target associated path is a parameter configured by the network-side device through radio resource control (Radio Resource Control, RRC) signaling, so as to achieve sensing performance under the target received power. For example, based on sensing accuracy such as 95% in sensing requirements, the core network sensing network function determines that ReceivedTargetPower needs to be greater than -100dBm.

Optionally, in one implementation, the preset received power of the sensing target associated path being determined by a format of the second signal may be understood that the preset received power of the sensing target associated path corresponding to different formats of the second signal has different values.

It should be noted that the format (Format) of the second signal includes a sequence format of the second signal, a bandwidth (such as the number of subcarriers or the number of RBs), and the like.

For example, a correspondence between the format of the second signal and the preset received power of the sensing target associated path is shown in Table 2.

**Table 2: Correspondence between the format of the second signal and the preset received power of the sensing target associated path**

| Format of the first signal | Value of ReceivedTargetPower |
|---|---|
| Format A | Value 1 |
| Format B | Value 2 |
| Format C | Value 3 |

Optionally, in a second implementation, the target received power is equal to a sum of the preset received power of the sensing target associated path and a power offset.

Optionally, in one implementation, the power offset is determined based on the format of the second signal; or the preset received power of the sensing target associated path is determined based on the format of the second signal.

It should be noted that a value (the table below) of the power offset (DELTA) corresponding to the format of the second signal is defined by the protocol or notified by the network-side device to the terminal. When the power offset is determined based on the format of the second signal, the values of the power offset corresponding to different formats of the second signal are different. For example, the correspondence between the format of the second signal and the value of the power offset is shown in Table 3.

**Table 3: Correspondence between the format of the second signal and the value of the power offset**

| Format of the second signal | Value of DELTA |
|---|---|
| Format A | Value 1 |
| Format B | Value 2 |
| Format C | Value 3 |

It should be noted that, in a case that a power offset is introduced, the network-side device may usually configure a same preset received power of the sensing target associated path for different formats of the second signal.

### A23. Path loss parameter

It should be noted that the path loss parameter is determined based on the received power of the sensing target associated path.

Optionally, in a first implementation, the path loss parameter is a path loss factor, and the path loss factor is determined based on a transmitting power of the first signal indicated by the network-side device and the received power of the sensing target associated path.

For example, the path loss factor is determined based on the following formula: $PathLoss factor = reference signal power - first indicator ;$ where
PathLoss factor is a path loss factor, the first indicator is the received power of the sensing target associated path obtained by the terminal by measuring the first signal; reference signal power (reference signal power) is the transmitting power of the first signal, and reference signal power is notified to the terminal by the network-side device, for example, the network-side device broadcasts it through system information block (System Information Block, SIB) signaling; and the first signal is a signal sent by the base station, such as a synchronization signal, CSI-RS, or other signals.

It should be noted that a difference between the reference signal power and the received power of the sensing target associated path may better reflect a sensed path loss (that is, a path loss of a sensing signal from a transmitting end after being reflected by a sensing target and reaching a receiving end).

Optionally, in a second implementation, the path loss parameter is determined based on a path loss factor and a partial path loss compensation factor.

Optionally, the path loss parameter is a product of the path loss factor multiplied by the partial path loss compensation factor.

It should be noted that, optionally, the path loss factor generally takes a value between 0 and 1, that is, partial path loss compensation, to alleviate uplink co-frequency interference between cells; optionally, to ensure sensing performance, at least in a case that the uplink co-frequency interference of the cell is not serious or interference coordination measures are taken, the path loss factor may be set to 1 (that is, full path loss compensation), or even the path loss factor is greater than 1, to provide some margin for the received power of the sensing target associated path to ensure sensing performance.

The specific form 2 of the second parameter is: the first parameter includes A31 to A34, and the like.

A31. Maximum transmitting power of the terminal.

A32. Target received power.

A33. Path loss parameter.

A34. Second parameter.

The second parameter includes at least one of the following:
A341. Bandwidth occupied by the second signal.

Optionally, in one implementation, the bandwidth occupied by the second signal is determined based on the number of RBs occupied by the second signal.

For example, RB factor*=*10*log*₁₀(2*^{µ}M_{RB,b,f,c}*(*i*)), where RB factor is the bandwidth occupied by the second signal, *M_{RB,b,f,c}*(*i*) is the number of RBs of the first signal at time i, and the total bandwidth of the second signal is determined in combination with the SCS subcarrier spacing, *M_{RB,b,f,c}*(*i*) is defined for bandwidth part BWP(b), carrier (f), and cell (c); and *µ* is related to a subcarrier spacing and may take values 0, 1, 2, 3, and the like, corresponding to subcarrier spacings of 15KHz, 30KHz, 60KHz, and 120KHz, respectively.

Optionally, in a first implementation, the number of RBs occupied by the second signal is determined by the number of RBs occupied by the subcarriers occupied by the second signal.

This case can be understood as that the number of RBs occupied by the second signal is determined based on the number of RBs spanned by the second signal, that is, some RBs are not occupied by all subcarriers but only by some subcarriers, then the RB is also considered as one of the RBs spanned by the second signal.

Optionally, in a second implementation, the number of RBs occupied by the second signal is determined based on the number of subcarriers occupied by the second signal.

This case can be understood as converting the number of subcarriers occupied by the second signal to the total number of RBs to obtain the number of RBs occupied by the second signal. It should be noted here that if the obtained value is not an integer, an integer value may be obtained by rounding up or rounding down; for example, if the first signal occupies 50% of the subcarriers of one RB, then the RB is considered as 0.5 RB, and 1 RB is obtained by rounding up.

It should be noted that in this manner, the influence of frequency-domain non-uniform sensing signals or sensing signals with different frequency-domain densities is considered. In order to keep the transmitting power of the terminal unchanged within one slot (slot), a signal pattern may be designed so that frequency-domain resources on the symbols of the transmitted sensing signal (that is, the second signal) within one slot are the same, so that the transmitting power on each symbol within the slot is the same; or, the average number of RBs within one time window (such as a slot) is calculated, and a transmitting power of the terminal on the slot is determined based on the average number.

A342. Power adjustment value.

Optionally, the power adjustment value is configured by the network-side device for the terminal. For example, as shown in Table 4, the network-side device uses two bits (bit) of downlink control information (Downlink Control Information, DCI) to indicate the power adjustment value.

**Table 4: Correspondence between different bits of DCI and power adjustment values**

| Two bits of DCI | Power adjustment value (dB) |
|---|---|
| 00 | -1 |
| 01 | 0 |
| 10 | 1 |
| 11 | 3 |

The determining manners of the transmitting power of the second signal are specifically described below.

Case 1: The first parameter includes: the maximum transmitting power of the terminal, target received power, and path loss parameter.

It should be noted that this case can be understood as performing open-loop power control, and the terminal may determine the transmitting power of the second signal according to the following formula: $Tx Power = MAX \left\{P-MAX,\left(Target Rx Power+α⋅PathLoss factor\right)\right\} ;$ where
Tx Power is the transmitting power of the second signal; P-MAX is the maximum transmitting power of the terminal; Target Rx Power is the target received power; α is the partial path loss compensation factor; and PathLoss factor is the path loss factor.

Case 2: The first parameter includes: the maximum transmitting power of the terminal, target received power, path loss parameter, and second parameter, where the second parameter includes a power adjustment value.

It should be noted that this case can be understood as performing closed-loop power control, and the terminal may determine the transmitting power of the second signal according to the following formula: 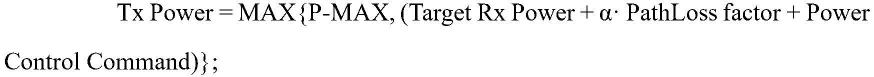 Tx Power = MAX {P-MAX, (Target Rx Power + α· PathLoss factor + Power Control Command)}; where
Power Control Command is the power adjustment value.

Case 3: The first parameter includes: the maximum transmitting power of the terminal, target received power, path loss parameter, and second parameter, where the second parameter includes the bandwidth occupied by the second signal.

It should be noted that this case can be understood as performing open-loop power control, and the terminal may determine the transmitting power of the second signal according to the following formula: 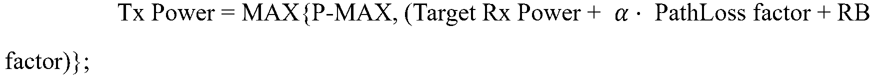 Tx Power = MAX{P-MAX, (Target Rx Power + α · PathLoss factor + RB factor)}; where
RB factor is the bandwidth occupied by the second signal.

Case 4: The first parameter includes: the maximum transmitting power of the terminal, target received power, path loss parameter, and second parameter, where the second parameter includes the bandwidth occupied by the second signal and a power adjustment value.

It should be noted that this case can be understood as performing closed-loop power control, and the terminal may determine the transmitting power of the second signal according to the following formula: 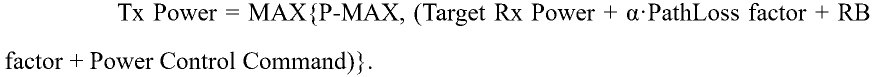 Tx Power = MAX{P-MAX, (Target Rx Power + α·PathLoss factor + RB factor + Power Control Command)}.

It should be noted that the calculation manner of the transmitting power of the second signal in the embodiments of this application only focuses on the parameters related to the sensing path. Certainly, other parameters may also be introduced into the calculation formula of the received power, for example, factors related to the modulation and coding scheme (Modulation and Coding Scheme, MCS) in NR power control.

It should also be noted that after determining the transmitting power according to the foregoing power control formula, the terminal needs to report transmitting power related information (power absolute value or power headroom (Power headroom)) to the network-side device.

Optionally, in one implementation, the received power of the sensing target associated path mentioned in this embodiment of this application is a linear average of a received power of a channel response at a sensing target associated path of resource elements that carry the first signal for measurement.

It should be noted that the sensing target associated path may also be referred to as a path associated with the sensing target.

This can be understood as that the sensing target associated path may be distributed on multiple resource elements, and the finally determined received power of the sensing target associated path is obtained by linearly averaging the received power of the sensing target associated path on the multiple resource elements. The unit of the received power of the sensing target associated path is watt (W).

It should be noted here that the resource element may be at least one of a frequency-domain unit and a time-domain unit.

Optionally, an obtaining manner of the sensing target associated path includes:
Step a1. The terminal performs channel estimation based on the first signal and a received signal corresponding to the first signal to obtain a channel response.
Step a2. Transform the channel response to a first dimension, where
   the first dimension includes at least one of the following:
   delay dimension;
   Doppler dimension;
   azimuth angle dimension; and
   zenith angle dimension.

For example, when the first dimension includes a delay dimension and a Doppler dimension, it may be referred to as a delay-Doppler dimension; or when the first dimension includes a delay dimension, a Doppler dimension, and an azimuth, it may be referred to as a delay-Doppler-angle dimension.

Step a3. Determine a sensing target associated path in paths corresponding to the first dimension.

Optionally, the specific implementation of determining the sensing target associated path in this step includes:
selecting, from the paths corresponding to the first dimension, a path satisfying a first condition as the sensing target associated path; where
the first condition includes at least one of the following:

A41. A third parameter of a path exceeds a first threshold or is located within a first interval.

The third parameter includes at least one of the following: amplitude, power, intensity, energy, Doppler, delay, and angle.

It should be noted here that values of the first threshold corresponding to different third parameters are different, or range values of the first interval corresponding to different third parameters are different.

For example, a third threshold is 5 times a noise threshold.

A42. A difference between a third parameter of a path and a third parameter of a first-arrival path or a reference path exceeds a second threshold or is located within a second interval.

For example, the first-arrival path may be a line of sight (line of sight, LOS) path. For example, the reference path may be a signal path reflected by a known target (such as a reconfigurable intelligent surface (Reconfigurable intelligent surface, RIS)/backscatter (Backscatter)/other known passive targets).

A43. A fourth parameter of a path satisfies a preset modulation rule.

The fourth parameter includes at least one of the following: amplitude, power, intensity, energy, and phase.

Optionally, the preset modulation rule is a modulation rule of a tag (Tag)/backscatter device or RIS, that is, the sensing target associated path may be a path that is modulated and reflected by a Tag/backscatter device or RIS.

It should be noted that after transforming the channel response to the first dimension, the terminal may directly select, based on the paths corresponding to the first dimension, a path that satisfies the first condition as the sensing target associated path. Certainly, to improve the selection efficiency, the embodiments of this application also provide another selection manner, that is, optionally, the specific implementation of selecting, from the paths corresponding to the first dimension, a path that satisfies the first condition as the sensing target associated path includes:
determining a first path set from the paths corresponding to the first dimension, where a fifth parameter of each path in the first path set exceeds a third threshold, and the fifth parameter includes at least one of the following: amplitude, power, intensity, and energy; and
determining, from the first path set, the path satisfying the first condition as the sensing target associated path.

It should be noted here that the third thresholds corresponding to different fifth parameters may be different or the same.

This manner may be understood as first determining a set of a small range of paths from the paths corresponding to the first dimension, and then determining the sensing target associated path from this set. That is, the third threshold is a detection threshold of the first path set.

It should be noted that the fifth threshold may be set to be higher than a noise threshold or higher than a noise interference threshold.

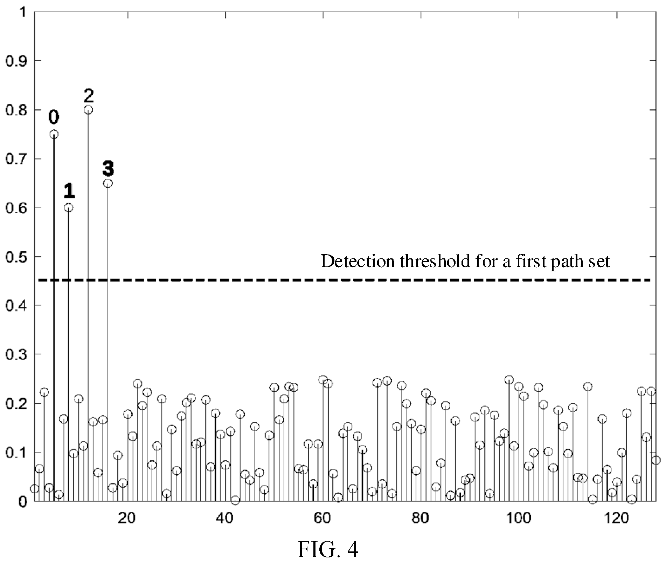

For example, as shown in FIG. 4, paths 0, 1, 2, and 3 in FIG. 4 are paths in the first path set, where paths 2 and 3 are sensing paths whose amplitude, power, intensity, or energy exceeds the fifth threshold, and paths 0 and 1 are paths associated with other scatterers. It should be noted that in FIG. 4, the horizontal axis is the first dimension, and the vertical axis is the normalized amplitude/power/intensity/energy.

For frequency range 1 (frequency range 1), the reference point (reference point) of the first indicator may be the antenna connector (antenna connector) of the terminal. For frequency range 1, if the terminal has multiple receive channels, the first indicator measured and reported by the terminal cannot be lower than an indicator of any single receive channel. For frequency range 2, the first indicator measured on a specific receive channel needs to be obtained by measuring the combined signal on multiple antenna elements corresponding to the receive channel.

For example, a first specific obtaining process of the received power of the sensing target associated path may be:
The terminal performs channel estimation based on the sent first signal *X*(*k*) and the received signal *Y*(*k*) corresponding to the first signal to obtain a channel response (Channel Response) *H*(*k*) *= Y*(*k*)/*X*(*k*), where *k* represents a resource element index, and *k* = 0,1,2, *... , K -* 1. After obtaining the channel response *H*(*k*), the terminal transforms it to the first dimension and determines the sensing target associated path in the first dimension. Then the received power of the sensing target associated path is calculated. If the sensing target associated path includes multiple paths, the sum of powers of the multiple paths is calculated as the received power of the sensing target associated path.

For example, *H*(*f*) is a channel response, where *f* = 0,1,2, *... , N -* 1 represents a frequency-domain sampling point (for example, a subcarrier index), then it may be transformed to a delay dimension (first dimension) by performing an inverse Fourier transform on *H*(*f*)*.* For another example, *H*(*f, t*) is a channel response, where *f* = 0,1,2, *... , N -* 1 represents a frequency-domain sampling point (for example, a subcarrier index), *t* represents a time-domain sampling point (for example, an OFDM symbol index), and *t* = 0,1,2, ..., *M -* 1; then it may be transformed to a delay-Doppler dimension (first dimension) by performing an inverse Fourier transform along the frequency-domain dimension and a Fourier transform along the time-domain dimension on *H*(*f, t*)*.* For another example, *H*(*f, t, s*) is a channel response, where *f* = 0,1,2, *... , N -* 1 represents a frequency-domain sampling point (for example, a subcarrier index), *t* represents a time-domain sampling point (for example, an OFDM symbol index), *t =* 0,1,2, *... , M -* 1, s represents a spatial-domain sampling point (antenna index or port index), and s = 0,1,2, ..., *P* - 1; then it may be transformed to a delay-Doppler-angle dimension (first dimension) by performing an inverse Fourier transform along the frequency-domain dimension, a Fourier transform along the time-domain dimension, and a Fourier transform along the antenna-domain dimension on *H*(*f, t, s*)*.*

For example, a second specific obtaining process of the received power of the sensing target associated path may be:

Optionally, when calculating the received power of the sensing target associated path, it may also be a difference between the power of the sensing target associated path in the first dimension and ${N}_{1} {P}_{σ}^{avr}$ as the received power of the sensing target associated path, where *N*₁ represents the number of sensing target associated paths. ${P}_{σ}^{avr}$ is an average power of multiple paths outside the first path set in the first dimension.

It should be noted that the foregoing thresholds or intervals may be sent to the terminal by other devices (such as a network-side device), and other devices may determine them based on sensing prior information or sensing requirements. Alternatively, the foregoing thresholds or intervals are determined by the terminal based on sensing prior information or sensing requirements.

It should be noted that the sensing prior information or sensing requirements include one or more of the following information.

B11. Sensing service or sensing service type.

It should be noted that the sensing service mentioned in the embodiments of this application may be services such as detecting whether a target exists, positioning, speed detection, distance detection, angle detection, acceleration detection, material analysis, composition analysis, shape detection, category classification, radar cross section (Radar Cross Section, RCS) detection, polarization scattering characteristic detection, fall detection, intrusion detection, quantity statistics, indoor positioning, gesture recognition, lip language recognition, gait recognition, expression recognition, face recognition, breathing monitoring, heart rate monitoring, pulse monitoring, humidity/brightness/temperature/atmospheric pressure monitoring, air quality monitoring, weather condition monitoring, environment reconstruction, terrain and landform, building/vegetation distribution detection, pedestrian flow or vehicle flow detection, crowd density, and vehicle density detection. The sensing service type may be to classify multiple different sensing services based on specific characteristics, for example, based on function, being divided into detection-type sensing services (for example, including intrusion detection, fall detection), parameter estimation-type sensing services (distance, angle, speed calculation), recognition-type sensing services (action recognition, identity recognition), and the like, or being divided based on the sensing range (short-distance sensing, medium-distance sensing, and long-distance sensing), or being divided based on the fineness of sensing (coarse-grained sensing, fine-grained sensing, and the like), or being divided based on power consumption/energy consumption, or being divided based on resource occupation, or the like. If the sensing service is breathing monitoring, the corresponding normal breathing frequency may be determined based on the person's gender and age (for example, male: 13-21 times/minute, female: 15-20 times/minute; adult: 12-20 times/minute, child: about 30-40 times/minute), which may be used as sensing prior information.

B12. Sensing target area.

The sensing target area refers to a location area of the sensing object, or a location area where imaging or environment reconstruction needs to be performed; for example, the preset interval of the delay of the sensing target associated path is determined based on an approximate location/distance of the sensing object.

B13. Sensing object type.

It should be noted that by classifying the sensing objects based on the possible motion characteristics of the sensing objects, the sensing object type may be obtained. Each sensing object type contains information such as the motion speed range, motion acceleration range, and typical RCS range of typical sensing objects.

B14. The number of sensing targets.

For example, a camera sensing result may be used as a type of sensing prior information to obtain the number of sensing targets.

It should also be noted here that if the terminal determines multiple sensing targets, or the terminal obtains the number of sensing targets based on sensing prior information or sensing requirements, there are the following methods:

Method 1: Calculate the target indicator of each sensing target separately. For example, in FIG. 4, paths associated with each sensing target are determined separately, and then target indicators corresponding to each sensing target are calculated separately. In this case, when calculating a second indicator corresponding to a specific sensing target (such as sensing target A), there are two methods: that is, second indicator of sensing target A = total received power - first indicator of sensing target A; or, second indicator of sensing target A = total received power - first indicator of sensing target A - first indicator of sensing target B (assuming there are two sensing targets: A and B in total). Similarly, there are also two calculation methods for the fourth indicator: fourth indicator of sensing target A = reference signal received power (Reference Signal Received Power, RSRP) of the first signal - first indicator of sensing target A; or, fourth indicator of sensing target A = RSRP of the first signal - first indicator of sensing target A - first indicator of sensing target B (assuming there are two sensing targets: A and B in total).

Method 2: Calculate one target indicator for multiple sensing targets. For example, in FIG. 4, paths associated with any sensing target are determined, and then these paths are all used as paths associated with the sensing target. It is equivalent to treating multiple sensing targets as one virtual sensing target, and then calculating the target indicator corresponding to the virtual sensing target.

It should also be noted that the configuration information of the first signal and the configuration information of the second signal are configured by the network-side device for the terminal and sent to the terminal. Optionally, the configuration information may include but is not limited to at least one of the following:
C101. Signal resource identifier (Identity, ID), used to distinguish different signal resource configurations.
C102. Signal purpose, indicating that the signal is a signal used for communication (such as channel measurement, channel estimation, synchronization, carrying data information), a signal used for sensing, or a signal used for both communication and sensing. Specifically, it may also be a signal used for which sensing service or a signal used for which type of sensing service. For the definitions of the sensing service and sensing service type, refer to explanation 2.
C103. Waveform, where the waveform is, for example, orthogonal frequency division multiplex (Orthogonal frequency division multiplex, OFDM), single-carrier frequency-division multiple access (Single-carrier Frequency-Division Multiple Access, SC-FDMA), orthogonal time frequency space (Orthogonal Time Frequency Space, OTFS), frequency modulated continuous wave (Frequency Modulated Continuous Wave, FMCW), pulse signal, or the like.
C104. Subcarrier spacing, where, for example, the subcarrier spacing of an OFDM system is 30KHz.
C105. Guard period. The guard period is a time interval from a moment when transmission of the signal ends to a moment when a latest echo signal of the signal is received; and this parameter is proportional to the maximum sensing distance. For example, it may be calculated based on c/(2R_max), where R_max is the maximum sensing distance (belonging to sensing requirement information). For example, for a self-transmitting and self-receiving sensing signal, R_max represents the maximum distance related to the sensing signal receiving time to the signal transmitting time. In some cases, a cyclic prefix (Cyclic Prefix, CP) of an OFDM signal may play the role of the minimum guard period; and c is the speed of light.
C106. Starting frequency-domain position, that is, a starting frequency, which may also be a starting RE or RB index.
C107. Starting time-domain position, that is, a starting time point, which may also be a starting symbol index, slot index, or frame index.
C108. Ending frequency-domain position, that is, an ending frequency point, which may be represented by an ending RE or RB index.
C109. Ending time-domain position, that is, an ending time point, which may be represented by an ending RE or RB index.
C110. Frequency-domain resource length, that is, a frequency-domain bandwidth. The frequency-domain bandwidth is inversely proportional to a distance resolution. The frequency-domain bandwidth B of each first signal is greater than or equal to c/(2ΔR), where c is the speed of light and ΔR is a distance resolution.
C111. Time-domain resource length, also known as burst (burst) duration. The time-domain resource length is inversely proportional to a Doppler resolution.
C112. Frequency-domain resource interval, indicating an interval between adjacent signal frequency-domain resource elements, which may be represented by the number of REs or RBs, or by a density value (Density). For example, Density=1 indicates that one RE in each RB is used to carry signals. The frequency-domain resource interval is inversely proportional to the maximum unambiguous distance/delay. For an OFDM system, when subcarriers are continuously mapped, a frequency-domain interval is equal to a subcarrier spacing.
C113. Time-domain resource interval. The time-domain resource interval is a time interval between two adjacent signal resource elements. The time-domain resource interval is associated with the maximum unambiguous Doppler frequency shift or the maximum unambiguous speed.
C114. Time-domain resource characteristics: periodic transmission, semi-persistent transmission, and aperiodic transmission.
C115. Signal power, for example, a value is taken every 2dBm from - 20dBm to 23dBm.
C116. Sequence information, including sequence type information (ZC sequence, PN sequence, and the like), sequence generation method, sequence length, and so on.
C117. Signal direction, and angle information or beam information of signal transmission.
C118. Quasi-co-location (Quasi-Co-Location, QCL) relationship. For example, a sensing signal includes multiple resources, each resource is QCLed with a synchronization signaling block (Synchronization Signaling Block, SSB), and QCL includes Type A, B, C, or D.
C119. Antenna port information, such as the maximum number of antenna ports and an antenna port index.
C120. Cyclic prefix (Cyclic Prefix, CP) information, including CP type (such as normal cyclic prefix (Normal Cyclic Prefix, NCP), extended cyclic prefix (Extended Cyclic Prefix, ECP), a newly designed sensing measurement dedicated CP, or the like), CP length, and so on.

It should be noted that the network-side device receives a second signal, obtains a sensing measurement quantity, and sends the sensing measurement quantity to a sensing network (Sensing Function) function.

It should be noted that the sensing network function mentioned in the embodiments of this application may also be referred to as a sensing network element or a sensing function network element, which may be located on the RAN side or the core network side. It refers to a network node in the core network and/or RAN that is responsible for at least one function of sensing request processing, sensing resource scheduling, sensing information interaction, sensing data processing, and the like. It may be upgraded based on the AMF or location management function (Location Management Function, LMF) in a 5G network, or it may be other network nodes or newly defined network nodes. Specifically, functional characteristics of the sensing function network element may include at least one of the following:
C21. Exchange target information with a wireless signal transmitting device and/or a wireless signal measuring device (including a target terminal, a serving base station of the target terminal, or a base station associated with a target area), where the target information includes a sensing processing request, a sensing capability, sensing assistance data, a sensing measurement quantity type, sensing resource configuration information, and the like, so as to obtain a target sensing result or a value of a sensing measurement quantity (uplink measurement quantity or downlink measurement quantity) sent by the wireless signal measuring device; where the wireless signal may also be referred to as a sensing signal.
C22. Determine a to-be-used sensing method based on factors such as a type of sensing service, sensing service consumer information, required sensing quality of service (Quality of Service, QoS) requirement information, a sensing capability of the wireless signal transmitting device, and a sensing capability of the wireless signal measuring device. The sensing method may include: base station A transmits and base station B receives, or a base station transmits and the terminal receives, or base station A transmits and receives by itself, or the terminal transmits and a base station receives, or the terminal transmits and receives by itself, or terminal A transmits and terminal B receives, or the like.
C23. Determine a sensing device serving the sensing service based on factors such as the type of the sensing service, information of the sensing service consumer, required sensing QoS requirement information, a sensing capability of the wireless signal transmitting device, and a sensing capability of the wireless signal measuring device, where the sensing device includes a wireless signal transmitting device and/or a wireless signal measuring device.
C24. Manage overall coordination and scheduling of resources required for the sensing service, such as performing corresponding configuration of sensing resources for the base station and/or the terminal.
C25. Perform data processing on the value of the sensing measurement quantity, or perform calculation to obtain a sensing result; and further, verify the sensing result, estimate sensing accuracy, or the like.

Optionally, the measurement quantity may include but is not limited to at least one of the following:
C31. First-level measurement quantity (received signal/original channel information), including: received signal/channel response complex result, amplitude/phase, I-channel/Q-channel and their operation results (operations include addition, subtraction, multiplication, division, matrix addition, subtraction, multiplication, matrix transposition, trigonometric relationship operations, square root operations, power operations, and so on, as well as threshold detection results, maximum/minimum value extraction results, and the like of the foregoing operation results. The operations also include fast Fourier transform (Fast Fourier Transform, FFT)/inverse fast Fourier transform (Inverse Fast Fourier Transform, IFFT), discrete Fourier transform (Discrete Fourier Transform, DFT)/inverse discrete Fourier transform (Inverse Discrete Fourier Transform, IDFT), 2D-FFT, 3D-FFT, matched filtering, autocorrelation operations, wavelet transform, and digital filtering, and the like, as well as threshold detection results, maximum/minimum value extraction results, and the like of the foregoing operation results).
C32. Second-level measurement quantity (basic measurement quantity), including: delay, Doppler, angle, intensity, and their multidimensional combined representations.
C33. Third-level measurement quantity (basic attribute/state), including: distance, speed, orientation, spatial position, acceleration, and the like.
C34. Fourth-level measurement quantity (advanced attribute/state), including: whether a target exists, trajectory, action, expression, vital signs, quantity, imaging result, weather, air quality, shape, material, and composition.

Optionally, the measurement quantity also includes corresponding tag information, and the tag information includes at least one of the following:
C401. sensing signal identification information;
C402. sensing measurement configuration identification information;
C403. sensing service information (for example, sensing service ID);
C404. data subscription ID;
C405. measurement quantity purpose (communication, sensing, and communication-sensing);
C406. time information;
C407. sensing node information (for example, UE ID, node location, and device orientation);
C408. sensing link information (for example, sensing link number, and transceiving node identification);
C409. measurement quantity description information (for example, the form of the measurement quantity description information may be an amplitude value, a phase value, or a complex value combining amplitude and phase; and the form of the measurement quantity description information may be a resource type, such as a time-domain measurement result or a frequency-domain resource measurement result); and
C410. measurement quantity indicator information (for example, signal-to-noise ratio (Signal-to-Noise Ratio, SNR), or sensing SNR).

Optionally, the sensing requirement information mentioned in the embodiments of this application includes at least one of the following:
C51. Sensing service or sensing service type.

It should be noted that the sensing service mentioned in the embodiments of this application may be services such as detecting whether a target exists, positioning, speed detection, distance detection, angle detection, acceleration detection, material analysis, composition analysis, shape detection, category classification, radar cross section (Radar Cross Section, RCS) detection, polarization scattering characteristic detection, fall detection, intrusion detection, quantity statistics, indoor positioning, gesture recognition, lip language recognition, gait recognition, expression recognition, face recognition, breathing monitoring, heart rate monitoring, pulse monitoring, humidity/brightness/temperature/atmospheric pressure monitoring, air quality monitoring, weather condition monitoring, environment reconstruction, terrain and landform, building/vegetation distribution detection, pedestrian flow or vehicle flow detection, crowd density, and vehicle density detection. The sensing service type may be to classify multiple different sensing services based on specific characteristics, for example, based on function, being divided into detection-type sensing services (for example, including intrusion detection, fall detection), parameter estimation-type sensing services (distance, angle, speed calculation), recognition-type sensing services (action recognition, identity recognition), and the like, or being divided based on the sensing range (short-distance sensing, medium-distance sensing, and long-distance sensing), or being divided based on the fineness of sensing (coarse-grained sensing, fine-grained sensing, and the like), or being divided based on power consumption/energy consumption, or being divided based on resource occupation, or the like. If the sensing service is breathing monitoring, the corresponding normal breathing frequency may be determined based on the person's gender and age (for example, male: 13-21 times/minute, female: 15-20 times/minute; adult: 12-20 times/minute, child: about 30-40 times/minute), which may be used as sensing prior information.

C51. Sensing target area.

The sensing target area refers to a possible location area of a sensing object, or a location area where imaging or environment reconstruction needs to be performed; for example, the preset interval of the delay of the sensing target associated path is determined based on an approximate location/distance of the sensing object.

C53. Sensing object type.

It should be noted that by classifying the sensing objects based on the possible motion characteristics of the sensing objects, the sensing object type may be obtained. Each sensing object type contains information such as the motion speed, motion acceleration, and typical RCS of typical sensing objects.

C54. Sensing QoS.

It should be noted that the sensing QoS is a performance indicator for sensing a sensing target area or a sensing object, including at least one of the following:
C541. sensing resolution (which may be further divided into: ranging resolution, angle measurement resolution, speed measurement resolution, and imaging resolution), or the like;
C542. sensing accuracy (which may be further divided into: ranging accuracy, angle measurement accuracy, speed measurement accuracy, positioning accuracy, and the like);
C543. sensing range (which may be further divided into: ranging range, speed measurement range, angle measurement range, imaging range, and the like);
C544. sensing delay (a time interval from sending a sensing signal to obtaining a sensing result, or a time interval from initiating a sensing requirement to obtaining a sensing result);
C545. sensing update rate (a time interval between two adjacent executions of sensing and obtaining sensing results);
C546. detection probability (a probability of being correctly detected when a sensing object exists);
C547. false alarm probability (a probability of incorrectly detecting a sensing target when a sensing object does not exist); and
C548. the maximum number of targets that can be sensed.

It should be noted that the embodiments of this application propose a signal transmission method, so as to ensure sensing performance by ensuring that the received power of the sensing target associated path meets the requirements.

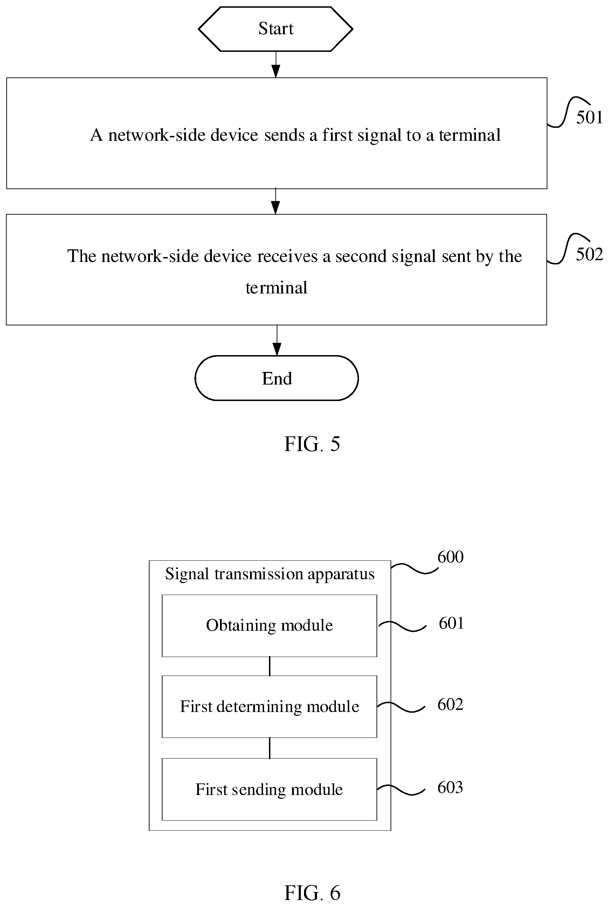

As shown in FIG. 5, an embodiment of this application provides a signal transmission method, including the following steps.

Step 501: A network-side device sends a first signal to a terminal.

Step 502: The network-side device receives a second signal sent by the terminal, where a transmitting power of the second signal is determined based on a received power that is of a sensing target associated path and that is obtained by the terminal by receiving the first signal.

Optionally, the method further includes:
determining a target beam through a downlink sensing beam management process or an uplink sensing beam management process; where
the target beam includes at least one of the following:
   a downlink transmitting beam;
   a downlink receiving beam;
   an uplink transmitting beam; and
   an uplink receiving beam.

Optionally, the method further includes:
sending, by the network-side device, a preset received power of the sensing target associated path to the terminal.

Optionally, the method further includes:
sending, by the network-side device, a transmitting power of the first signal to the terminal.

It should be noted that all the descriptions about the network-side device in the foregoing embodiments are applicable to the embodiments of the signal transmission indication method applied to the network-side device, with the same technical effects achieved. Details are not repeated here.

As shown in FIG. 6, the signal transmission apparatus 600 in this embodiment of this application is applied to a terminal, and includes:
an obtaining module 601, configured to measure a first signal sent by a network-side device, and obtain a received power of a sensing target associated path;
a first determining module 602, configured to determine a transmitting power of a second signal based on the received power of the sensing target associated path; and
a first sending module 603, configured to send the second signal to the network-side device by using the transmitting power.

Optionally, the first determining module 602 is configured to:
determine the transmitting power of the second signal based on a first parameter; where
the first parameter includes: the maximum transmitting power of the terminal, a target received power, and a path loss parameter; or
the first parameter includes: the maximum transmitting power of the terminal, a target received power, a path loss parameter, and a second parameter; where the second parameter includes at least one of the following: a bandwidth occupied by the second signal and a power adjustment value; where
the path loss parameter is determined based on the received power of the sensing target associated path.

Optionally, the target received power is equal to a preset received power of the sensing target associated path; or
the target received power is equal to a sum of the preset received power of the sensing target associated path and a power offset.

Optionally, the preset received power of the sensing target associated path is determined by a format of the second signal; or
the power offset is determined by a format of the second signal.

Optionally, the path loss parameter is a path loss factor, and the path loss factor is determined based on a transmitting power of the first signal indicated by the network-side device and the received power of the sensing target associated path.

Optionally, the path loss parameter is determined based on a path loss factor and a partial path loss compensation factor.
the path loss factor is determined based on a transmitting power of the first signal indicated by the network-side device and the received power of the sensing target associated path.

Optionally, the bandwidth occupied by the second signal is determined based on the number of resource blocks RBs occupied by the second signal; where
the number of RBs occupied by the second signal is determined based on the number of resource blocks RBs occupied by subcarriers occupied by the second signal, or by the number of subcarriers occupied by the second signal.

Optionally, the received power of the sensing target associated path mentioned is a linear average of a received power of a channel response at a sensing target associated path of resource elements that carry the first signal for measurement.

Optionally, an obtaining manner of the sensing target associated path includes:
performing channel estimation based on the first signal and a received signal corresponding to the first signal to obtain a channel response;
transforming the channel response to a first dimension; and
determining a sensing target associated path in paths corresponding to the first dimension; where
the first dimension includes at least one of the following:
   delay dimension;
   Doppler dimension;
   azimuth angle dimension; and
   zenith angle dimension.

Optionally, a specific implementation of determining a sensing target associated path in paths corresponding to the first dimension includes:
selecting, from the paths corresponding to the first dimension, a path satisfying a first condition as the sensing target associated path; where
the first condition includes at least one of the following:
   a third parameter of a path exceeds a first threshold or is located within a first interval;
   a difference between the third parameter of the path and a third parameter of a first-arrival path or a reference path exceeds a second threshold or is located within a second interval; and
   a fourth parameter of a path satisfies a preset modulation rule; where
   the third parameter includes at least one of the following: amplitude, power, intensity, energy, Doppler, delay, and angle; and
   the fourth parameter includes at least one of the following: amplitude, power, intensity, energy, and phase.

Optionally, a specific implementation of selecting, from the paths corresponding to the first dimension, a path satisfying a first condition as the sensing target associated path includes:
determining a first path set from the paths corresponding to the first dimension, where a fifth parameter of each path in the first path set exceeds a third threshold, and the fifth parameter includes at least one of the following: amplitude, power, intensity, and energy; and
determining, from the first path set, the path satisfying the first condition as the sensing target associated path.

Optionally, the obtaining module 601 is configured to:
receive and measure the first signal sent by the network-side device by using a downlink receiving beam associated with a downlink transmitting beam of the network-side device.

It should be noted that this apparatus embodiment corresponds to the apparatus, and all implementations in the foregoing method embodiments are applicable to this apparatus embodiment, with the same technical effects achieved. Details are not repeated here.

The signal transmission apparatus in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

An embodiment of this application further provides a terminal, including a processor and a communication interface, where the processor is configured to: measure a first signal sent by a network-side device, and obtain a received power of a sensing target associated path;
determine a transmitting power of a second signal based on the received power of the sensing target associated path; and
send the second signal to the network-side device by using the transmitting power.

Optionally, the processor is configured to:
determine the transmitting power of the second signal based on a first parameter; where
the first parameter includes: the maximum transmitting power of the terminal, a target received power, and a path loss parameter; or
the first parameter includes: the maximum transmitting power of the terminal, a target received power, a path loss parameter, and a second parameter; where the second parameter includes at least one of the following: a bandwidth occupied by the second signal and a power adjustment value; where
the path loss parameter is determined based on the received power of the sensing target associated path.

Optionally, the target received power is equal to a preset received power of the sensing target associated path; or
the target received power is equal to a sum of the preset received power of the sensing target associated path and a power offset.

Optionally, the preset received power of the sensing target associated path is determined by a format of the second signal; or
the power offset is determined by a format of the second signal.

Optionally, the path loss parameter is a path loss factor, and the path loss factor is determined based on a transmitting power of the first signal indicated by the network-side device and the received power of the sensing target associated path.

Optionally, the path loss parameter is determined based on a path loss factor and a partial path loss compensation factor.
the path loss factor is determined based on a transmitting power of the first signal indicated by the network-side device and the received power of the sensing target associated path.

Optionally, the bandwidth occupied by the second signal is determined based on the number of resource blocks RBs occupied by the second signal; where
the number of RBs occupied by the second signal is determined based on the number of RBs occupied by subcarriers occupied by the second signal, or by the number of subcarriers occupied by the second signal.

Optionally, the received power of the sensing target associated path mentioned is a linear average of a received power of a channel response at a sensing target associated path of resource elements that carry the first signal for measurement.

Optionally, the processor is further configured to:
perform channel estimation based on the first signal and a received signal corresponding to the first signal to obtain a channel response;
transform the channel response to a first dimension; and
determine a sensing target associated path in paths corresponding to the first dimension; where
the first dimension includes at least one of the following:
   delay dimension;
   Doppler dimension;
   azimuth angle dimension; and
   zenith angle dimension.

Optionally, the processor is configured to:
select, from the paths corresponding to the first dimension, a path satisfying a first condition as the sensing target associated path; where
the first condition includes at least one of the following:
   a third parameter of a path exceeds a first threshold or is located within a first interval;
   a difference between the third parameter of the path and a third parameter of a first-arrival path or a reference path exceeds a second threshold or is located within a second interval; and
   a fourth parameter of a path satisfies a preset modulation rule; where
   the third parameter includes at least one of the following: amplitude, power, intensity, energy, Doppler, delay, and angle; and
   the fourth parameter includes at least one of the following: amplitude, power, intensity, energy, and phase.

Optionally, the processor is configured to:
determine a first path set from the paths corresponding to the first dimension, where a fifth parameter of each path in the first path set exceeds a third threshold, and the fifth parameter includes at least one of the following: amplitude, power, intensity, and energy; and
determine, from the first path set, the path satisfying the first condition as the sensing target associated path.

Optionally, the communication interface is configured to:
receive and measure the first signal sent by the network-side device by using a downlink receiving beam associated with a downlink transmitting beam of the network-side device.

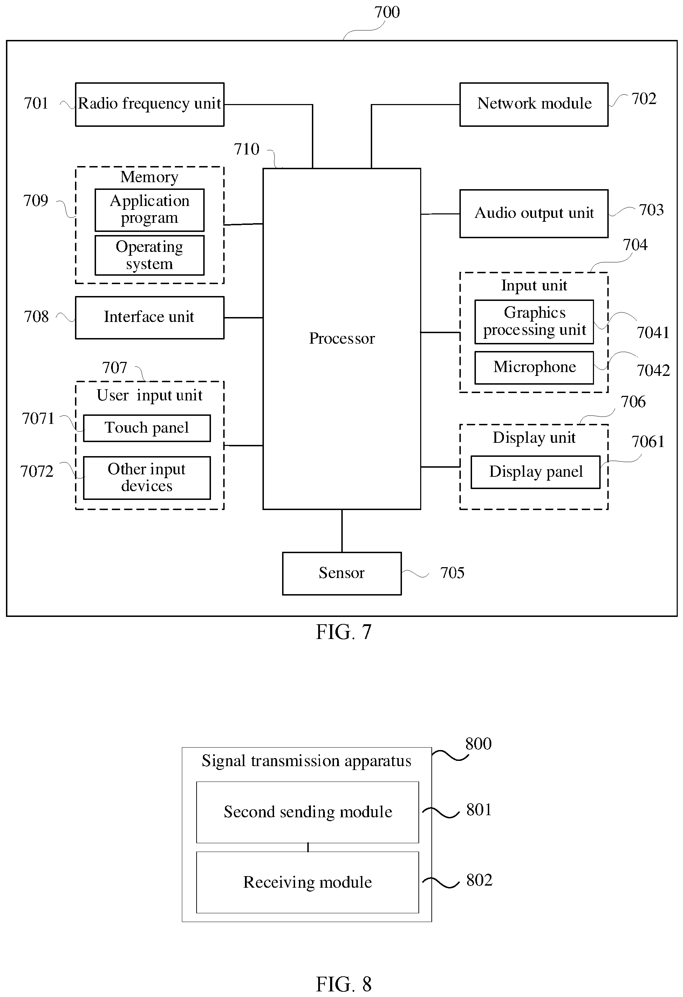

Preferably, an embodiment of this application further provides a terminal, including a processor and a memory, where a program or instructions capable of running on the processor are stored in the memory, and when the program or instructions are executed by the processor, the processes of the foregoing embodiments of the signal transmission method are implemented, with the same technical effects achieved. To avoid repetition, details are not described herein again. Specifically, FIG. 7 is a schematic diagram of a hardware structure of a terminal implementing an embodiment of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, after receiving downlink data from an access network device, the radio frequency unit 701 sends the downlink data to the processor 710 for processing; and the radio frequency unit 701 also sends uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may mainly include a first storage area for storing programs or instructions and a second storage area for storing data, where the first storage area may store an operating system, an application program or instructions required by at least one function (for example, an audio playing function and an image playing function), and the like. The memory 709 may include a volatile memory or a non-volatile memory, or the memory 709 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 709 described in the embodiments of this application is intended to include but is not limited to these and any other suitable types of memories.

The processor 710 may include one or more processing units. Optionally, the processor 710 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 710.

The processor 710 is configured to:
measure a first signal sent by a network-side device, and obtaining a received power of a sensing target associated path;
determine a transmitting power of a second signal based on the received power of the sensing target associated path; and
send the second signal to the network-side device by using the transmitting power.

Optionally, the processor 710 is configured to:
determine the transmitting power of the second signal based on a first parameter; where
the first parameter includes: the maximum transmitting power of the terminal, a target received power, and a path loss parameter; or
the first parameter includes: the maximum transmitting power of the terminal, a target received power, a path loss parameter, and a second parameter; where the second parameter includes at least one of the following: a bandwidth occupied by the second signal and a power adjustment value; where
the path loss parameter is determined based on the received power of the sensing target associated path.

Optionally, the target received power is equal to a preset received power of the sensing target associated path; or
the target received power is equal to a sum of the preset received power of the sensing target associated path and a power offset.

Optionally, the preset received power of the sensing target associated path is determined by a format of the second signal; or
the power offset is determined by a format of the second signal.

Optionally, the path loss parameter is a path loss factor, and the path loss factor is determined based on a transmitting power of the first signal indicated by the network-side device and the received power of the sensing target associated path.

Optionally, the path loss parameter is determined based on a path loss factor and a partial path loss compensation factor.
the path loss factor is determined based on a transmitting power of the first signal indicated by the network-side device and the received power of the sensing target associated path.

Optionally, the bandwidth occupied by the second signal is determined based on the number of resource blocks RBs occupied by the second signal; where
the number of RBs occupied by the second signal is determined based on the number of RBs occupied by subcarriers occupied by the second signal, or by the number of subcarriers occupied by the second signal.

Optionally, the received power of the sensing target associated path mentioned is a linear average of a received power of a channel response at a sensing target associated path of resource elements that carry the first signal for measurement.

Optionally, the processor 710 is further configured to:
perform channel estimation based on the first signal and a received signal corresponding to the first signal to obtain a channel response;
transform the channel response to a first dimension; and
determine a sensing target associated path in paths corresponding to the first dimension; where
the first dimension includes at least one of the following:
   delay dimension;
   Doppler dimension;
   azimuth angle dimension; and
   zenith angle dimension.

Optionally, the processor 710 is configured to:
select, from the paths corresponding to the first dimension, a path satisfying a first condition as the sensing target associated path; where
the first condition includes at least one of the following:
   a third parameter of a path exceeds a first threshold or is located within a first interval;
   a difference between the third parameter of the path and a third parameter of a first-arrival path or a reference path exceeds a second threshold or is located within a second interval; and
   a fourth parameter of a path satisfies a preset modulation rule; where
   the third parameter includes at least one of the following: amplitude, power, intensity, energy, Doppler, delay, and angle; and
   the fourth parameter includes at least one of the following: amplitude, power, intensity, energy, and phase.

Optionally, the processor 710 is configured to:
determine a first path set from the paths corresponding to the first dimension, where a fifth parameter of each path in the first path set exceeds a third threshold, and the fifth parameter includes at least one of the following: amplitude, power, intensity, and energy; and
determine, from the first path set, the path satisfying the first condition as the sensing target associated path.

Optionally, the radio frequency unit 701 is configured to:
receive and measure the first signal sent by the network-side device by using a downlink receiving beam associated with a downlink transmitting beam of the network-side device.

Preferably, an embodiment of this application further provides a terminal, including a processor and a memory, where a program or instructions capable of running on the processor are stored in the memory, and when the program or instructions are executed by the processor, the processes of the foregoing embodiments of the signal transmission method are implemented, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the signal transmission method are implemented, with the same technical effects achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

As shown in FIG. 8, the signal transmission apparatus 800 of this embodiment of this application is applied to a network-side device, and includes:
a second sending module 801, configured to send a first signal to a terminal; and
a receiving module 802, configured to receive a second signal sent by the terminal, where a transmitting power of the second signal is determined based on a received power that is of a sensing target associated path and that is obtained by the terminal by receiving the first signal.

Optionally, the apparatus further includes:
a second determining module, configured to determine a target beam through a downlink sensing beam management process or an uplink sensing beam management process; where
the target beam includes at least one of the following:
   a downlink transmitting beam;
   a downlink receiving beam;
   an uplink transmitting beam; and
   an uplink receiving beam.

Optionally, the apparatus further includes:
a third sending module, configured to send a preset received power of the sensing target associated path to the terminal.

Optionally, the apparatus further includes:
a fourth sending module, configured to send a transmitting power of the first signal to the terminal.

It should be noted that this apparatus embodiment corresponds to the method, and all implementations in the foregoing method embodiments are applicable to this apparatus embodiment, with the same technical effects achieved.

The communication apparatus provided in this embodiment of this application can implement the processes implemented in the embodiment of the signal transmission method in FIG. 3, with the same technical effects achieved. To avoid repetition, details are not described herein again.

An embodiment of this application further provides a network-side device, which includes a processor and a communication interface, where the processor is configured to send a first signal to a terminal, and receive a second signal sent by the terminal, where a transmitting power of the second signal is determined based on a received power that is of a sensing target associated path and that is obtained by the terminal by receiving the first signal.

Optionally, the processor is configured to:
determine a target beam through a downlink sensing beam management process or an uplink sensing beam management process; where
the target beam includes at least one of the following:
   a downlink transmitting beam;
   a downlink receiving beam;
   an uplink transmitting beam; and
   an uplink receiving beam.

Optionally, the communication interface is configured to:
send a preset received power of the sensing target associated path to the terminal.

Optionally, the communication interface is configured to:
send a transmitting power of the first signal to the terminal.

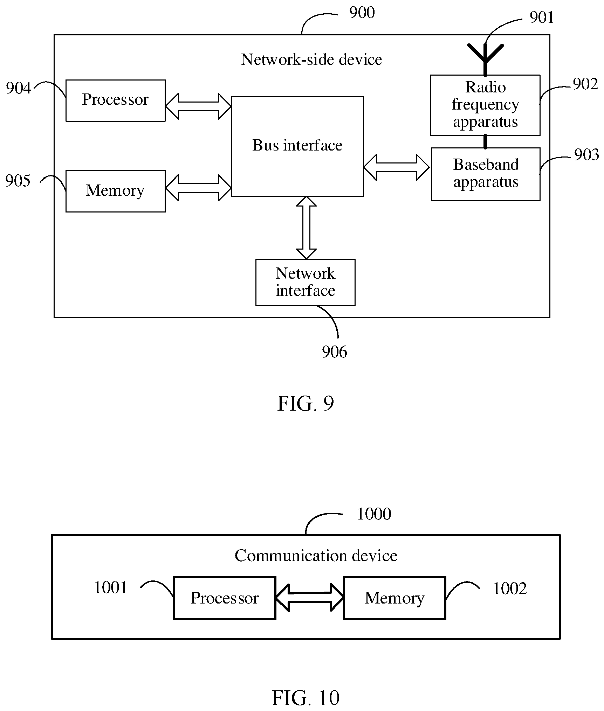

Specifically, an embodiment of this application further provides a network-side device. As shown in FIG. 9, the access network device 900 includes an antenna 901, a radio frequency apparatus 902, a baseband apparatus 903, a processor 904, and memory 905. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes to-be-sent information, and sends the information to the radio frequency apparatus 902; and the radio frequency apparatus 902 processes the received information and then sends the information out by using the antenna 901.

The method executed by the network-side device in the foregoing embodiments may be implemented on the baseband apparatus 903. The baseband apparatus 903 includes a baseband processor.

The baseband apparatus 903 may include, for example, at least one baseband board, where a plurality of chips are disposed on the baseband board. As shown in FIG. 9, one of the chips is, for example, the baseband processor, and connected to the memory 905 through a bus interface, to invoke the program in the memory 905 to perform the operations of the network device shown in the foregoing method embodiment.

The network-side device may further include a network interface 906, where the interface is, for example, a common public radio interface (common public radio interface, CPRI).

Specifically, the access network device 900 according to this embodiment of this application further includes instructions or programs stored in the memory 905 and capable of running on the processor 904, and the processor 904 calls the instructions or programs in the memory 905 to execute the methods performed by the modules shown in FIG. 8, with the same technical effects achieved. To avoid repetition, details are not described herein again.

An embodiment of this application further provides a readable storage medium. The readable storage medium stores a program or instructions. When the program or instructions are executed by a processor, each process of the foregoing embodiment of the signal transmission method is implemented, with the same technical effect achieved. To avoid repetition, details are not described herein again.

The processor is the processor in the access network device in the foregoing embodiment. The readable storage medium may be non-volatile or non-transient. The readable storage medium may include a computer-readable storage medium, such as a computer read-only memory ROM, a random access memory RAM, a magnetic disk, or an optical disc.

Optionally, as shown in FIG. 10, an embodiment of this application further provides a communication device 1000, including a processor 1001 and a memory 1002. A program or instructions capable of running on the processor 1001 are stored in the memory 1002. For example, when the communication device 1000 is a terminal and when the program or the instructions are executed by the processor 1001, the steps of the foregoing embodiments of the signal transmission method are implemented, with the same technical effects achieved. When the communication device 1000 is a network-side device and when the program or instructions are executed by the processor 1001, the steps of the foregoing embodiments of the signal transmission method are implemented, with the same technical effects achieved. To avoid repetition, details are not described herein again.

An embodiment of this application further provides a chip, where the chip includes a processor and a communication interface. The communication interface is coupled to the processor, and the processor is configured to run a program or instructions to implement the processes of the foregoing embodiments of the signal transmission method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the signal transmission method, with the same technical effects achieved. To avoid repetition, details are not repeated herein.

An embodiment of this application further provides a communication system, including a terminal and a network-side device, where the terminal can be configured to execute the steps of the signal transmission method described above, and the network-side device can be configured to execute the steps of the signal transmission method described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a ..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform. Specifically, the method in the foregoing embodiments may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. A signal transmission method, comprising:
measuring, by a terminal, a first signal sent by a network-side device, and obtaining a received power of a sensing target associated path;
determining, by the terminal, a transmitting power of a second signal based on the received power of the sensing target associated path; and
sending, by the terminal, the second signal to the network-side device by using the transmitting power.

2. The method according to claim 1, wherein the determining, by the terminal, a transmitting power of a second signal based on the received power of the sensing target associated path comprises:
determining the transmitting power of the second signal based on a first parameter; wherein
the first parameter comprises: the maximum transmitting power of the terminal, a target received power, and a path loss parameter; or
the first parameter comprises: the maximum transmitting power of the terminal, a target received power, a path loss parameter, and a second parameter; wherein the second parameter comprises at least one of the following: bandwidth occupied by the second signal and a power adjustment value; wherein
the path loss parameter is determined based on the received power of the sensing target associated path.

3. The method according to claim 2, wherein the target received power is equal to a preset received power of the sensing target associated path; or
the target received power is equal to a sum of the preset received power of the sensing target associated path and a power offset.

4. The method according to claim 3, wherein the preset received power of the sensing target associated path is determined by a format of the second signal; or
the power offset is determined by a format of the second signal.

5. The method according to claim 2, wherein the path loss parameter is a path loss factor, and the path loss factor is determined based on the transmitting power of the first signal indicated by the network-side device and the received power of the sensing target associated path.

6. The method according to claim 2, wherein the path loss parameter is determined based on a path loss factor and a partial path loss compensation factor; wherein
the path loss factor is determined based on the transmitting power of the first signal indicated by the network-side device and the received power of the sensing target associated path.

7. The method according to claim 2, wherein the bandwidth occupied by the second signal is determined based on the number of resource blocks RBs occupied by the second signal; wherein
the number of RBs occupied by the second signal is determined based on the number of RBs occupied by subcarriers occupied by the second signal, or by the number of subcarriers occupied by the second signal.

8. The method according to any one of claims 1 to 7, wherein the received power of the sensing target associated path is a linear average of a received power of a channel response at a sensing target associated path of resource elements that carry the first signal for measurement.

9. The method according to claim 8, wherein an obtaining manner of the sensing target associated path comprises:
performing, by the terminal, channel estimation based on the first signal and a received signal corresponding to the first signal to obtain a channel response;
transforming the channel response to a first dimension; and
determining a sensing target associated path in paths corresponding to the first dimension; wherein
the first dimension comprises at least one of the following:
delay dimension;
Doppler dimension;
azimuth angle dimension; and
zenith angle dimension.

10. The method according to claim 9, wherein the determining a sensing target associated path in paths corresponding to the first dimension comprises:
selecting, from the paths corresponding to the first dimension, a path satisfying a first condition as the sensing target associated path; wherein
the first condition comprises at least one of the following:
a third parameter of a path exceeds a first threshold or is located within a first interval;
a difference between the third parameter of the path and a third parameter of a first-arrival path or a reference path exceeds a second threshold or is located within a second interval; and
a fourth parameter of a path satisfies a preset modulation rule; wherein
the third parameter comprises at least one of the following: amplitude, power, intensity, energy, Doppler, delay, and angle; and
the fourth parameter comprises at least one of the following: amplitude, power, intensity, energy, and phase.

11. The method according to claim 10, wherein the selecting, from the paths corresponding to the first dimension, a path satisfying a first condition as the sensing target associated path comprises:
determining a first path set from the paths corresponding to the first dimension, wherein a fifth parameter of each path in the first path set exceeds a third threshold, and the fifth parameter comprises at least one of the following: amplitude, power, intensity, and energy; and
determining, from the first path set, the path satisfying the first condition as the sensing target associated path.

12. The method according to any one of claims 1 to 11, wherein the measuring a first signal sent by a network-side device comprises:
receiving and measuring, by the terminal, the first signal sent by the network-side device by using a downlink receiving beam associated with a downlink transmitting beam of the network-side device.

13. A signal transmission method, comprising:
sending, by a network-side device, a first signal to a terminal; and
receiving, by the network-side device, a second signal sent by the terminal, wherein a transmitting power of the second signal is determined based on a received power that is of a sensing target associated path and that is obtained by the terminal by receiving the first signal.

14. The method according to claim 13, further comprising:
determining a target beam through a downlink sensing beam management process or an uplink sensing beam management process; wherein
the target beam comprises at least one of the following:
a downlink transmitting beam;
a downlink receiving beam;
an uplink transmitting beam; and
an uplink receiving beam.

15. The method according to claim 13, further comprising:
sending, by the network-side device, a preset received power of the sensing target associated path to the terminal.

16. The method according to claim 13, further comprising:
sending, by the network-side device, a transmitting power of the first signal to the terminal.

17. A signal transmission apparatus, applied to a terminal and comprising:
an obtaining module, configured to measure a first signal sent by a network-side device, and obtain a received power of a sensing target associated path;
a first determining module, configured to determine a transmitting power of a second signal based on the received power of the sensing target associated path; and
a first sending module, configured to send the second signal to the network-side device by using the transmitting power.

18. The apparatus according to claim 17, wherein the first determining module is configured to:
determine the transmitting power of the second signal based on a first parameter; wherein
the first parameter comprises: the maximum transmitting power of the terminal, a target received power, and a path loss parameter; or
the first parameter comprises: the maximum transmitting power of the terminal, a target received power, a path loss parameter, and a second parameter; wherein the second parameter comprises at least one of the following: a bandwidth occupied by the second signal and a power adjustment value; wherein
the path loss parameter is determined based on the received power of the sensing target associated path.

19. The apparatus according to claim 18, wherein the target received power is equal to a preset received power of the sensing target associated path; or
the target received power is equal to a sum of the preset received power of the sensing target associated path and a power offset.

20. The apparatus according to claim 19, wherein the preset received power of the sensing target associated path is determined by a format of the second signal; or
the power offset is determined by a format of the second signal.

21. The apparatus according to claim 18, wherein the path loss parameter is a path loss factor, and the path loss factor is determined based on a transmitting power of the first signal indicated by the network-side device and the received power of the sensing target associated path.

22. The apparatus according to claim 18, wherein the path loss parameter is determined based on a path loss factor and a partial path loss compensation factor; wherein
the path loss factor is determined based on a transmitting power of the first signal indicated by the network-side device and the received power of the sensing target associated path.

23. The apparatus according to claim 18, wherein the bandwidth occupied by the second signal is determined based on the number of resource blocks RBs occupied by the second signal; wherein
the number of RBs occupied by the second signal is determined based on the number of RBs occupied by subcarriers occupied by the second signal, or by the number of subcarriers occupied by the second signal.

24. The apparatus according to any one of claims 17 to 23, wherein the received power of the sensing target associated path is a linear average of a received power of a channel response at a sensing target associated path of resource elements that carry the first signal for measurement.

25. A terminal, comprising a processor and a memory, wherein the memory stores a program or instructions capable of running on the processor, and when the program or instructions are executed by the processor, the steps of the signal transmission method according to any one of claims 1 to 12 are implemented.

26. A signal transmission apparatus, applied to a network-side device and comprising:
a second sending module, configured to send a first signal to a terminal; and
a receiving module, configured to receive a second signal sent by the terminal, wherein a transmitting power of the second signal is determined based on a received power that is of a sensing target associated path and that is obtained by the terminal by receiving the first signal.

27. The apparatus according to claim 26, further comprising:
a second determining module, configured to determine a target beam through a downlink sensing beam management process or an uplink sensing beam management process; wherein
the target beam comprises at least one of the following:
a downlink transmitting beam;
a downlink receiving beam;
an uplink transmitting beam; and
an uplink receiving beam.

28. A network-side device, comprising a processor and a memory, wherein the memory stores a program or instructions capable of running on the processor, and when the program or instructions are executed by the processor, the steps of the signal transmission method according to any one of claims 13 to 16 are implemented.

29. A readable storage medium, wherein a program or instructions are stored on the readable storage medium, and when the program or the instructions are executed by a processor, the steps of the signal transmission method according to any one of claims 1 to 16 are implemented.
